# EUROPEAN PATENT APPLICATION

(11) **EP 2 787 421 A1**
(43) Date of publication of application: **08.10.2014**
(21) Application number: 12853960.8
(22) Date of filing: 30.11.2012
(51) Int. Cl.: G06F 3/048, G06F 3/041

(54) **METHOD FOR OPERATING SCENE ON TOUCH SCREEN**

(30) Priority: 02.12.2011 KR 20110128361
(71) Applicant: GT Telecom Co. Ltd., Gyeongsangbuk-do 730-300 (KR)
(72) Inventor: HEO, Ju Won, Gyeongsangbuk-do 730-300 (KR)
(74) Representative: Clark, David James
(86) International application number: PCT/KR2012/010309
(87) International publication number: WO 2013/081413

(57) **Abstract**

Disclosed is a method of operating a screen on a touch screen (S) of a portable terminal (H), wherein a touch point is moved on a touch screen (S) of a portable terminal (H) from one point of a main touch area (M) which is a central work area of the touch screen (S) toward corner areas (A1, A2, A3, A4) of the touch screen (S) by a finger (F) of a user or a touch pen while touch sensing is maintained such that a screen is enlarged, an enlargement ratio of the screen is increased by moving the touch point to the main touch area M and repeatedly moving the touch point to the corner areas (A1, A2, A3, A4), a touch point is moved from one point of the corner areas (A1, A2, A3, A4) on the touch screen (S) toward the main touch area (M) such that the screen is downscaled, and a downscale ratio of the screen is increased by repeatedly moving the touch point to the main touch area (M) of the touch screen (S).

## Description

### Technical Field

The present invention relates to a method of operating a screen on a touch screen, and more particularly to a change of a screen size on a touch screen which is a user interface in various portable terminals such as a smartphone, a tablet PC, and a navigation system, that is a provision of an enlargement/downscale operating method.

### Background Art

In recent years, portable terminals are user interfaces such as various types of smart phones, tablet PCs, and navigation devices, and employ a touch screen for operating a user touch.

Due to attributes of a touch screen which should forward all operation instructions only through a touch screen without using a separate operation key or button, a method of ruling various operation types realized by a finger of a user or a touch pen has been suggested and used.

The method of ruling an operation type includes, in addition to a method of inputting letters by realizing a keyboard on a touch screen, a method of pushing and moving a driving screen in a desired direction by a finger of a user as a method of controlling left, right, upward, and downward scrolls of the screen, and a method of realizing a specific operation button on a screen to operate the operation button.

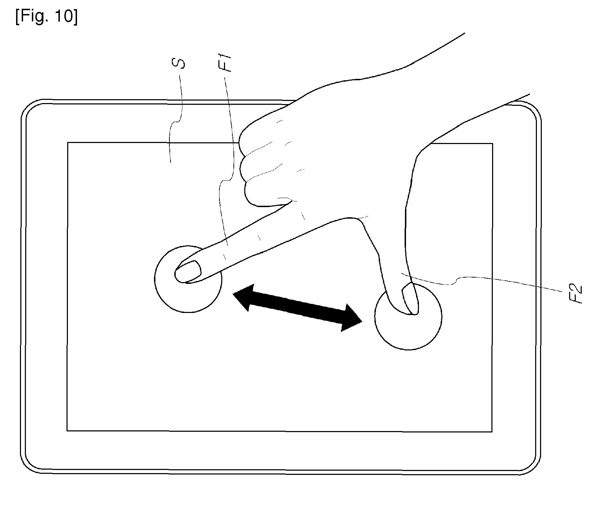

In particular, in recent years when graphics are realized as main contents, an operation method for enlarging and downscaling the driven screen has been required, and as shown in FIG. 10, as a method called pinch-in/pinch-out, two fingers F1 and F2 are simultaneously touched in the driven screen on the touch screen S to be expanded or contracted to enlarge or downscale the screen, and the method has been developed by a company and widely used.

Another method has been developed by a company, in which if a touch screen is short-touched (tapped) by a finger twice, a screen is maximally enlarged, and then if the touch screen is tapped twice again, the screen returns to an original state.

### Detailed Description of the Invention

### Technical Problem

However, among the methods according to the related art, in the former case, because a portable terminal having a touch screen should be gripped by one hand and then operated by two fingers of the other hand, the users generally gripping the portable terminal to use the portable terminal should lay down a load in the other hand to use the two fingers, which is inconvenient and makes it difficult for the user to walk.

In the latter case, because the maximum enlargement of a screen and returning to an original screen may be performed by a finger while the portable terminal is gripped by one hand but are realized through tapping, it is impossible to enlarge and downscale a screen to a specific size so that the screen can be enlarged to a maximum size or downscaled to a minimum size.

### Technical Solution

In accordance with an aspect of the present invention, there is provided a method of operating a screen on a touch screen (S) of a portable terminal (H), wherein a touch point is moved on a touch screen (S) of a portable terminal (H) from one point of a main touch area (M) which is a central work area of the touch screen (S) toward corner areas (A1, A2, A3, A4) of the touch screen (S) by a finger (F) of a user or a touch pen while touch sensing is maintained such that a screen is enlarged, an enlargement ratio of the screen is increased by moving the touch point to the main touch area M and repeatedly moving the touch point to the corner areas (A1, A2, A3, A4), a touch point is moved from one point of the corner areas (A1, A2, A3, A4) on the touch screen (S) toward the main touch area (M) such that the screen is downscaled, and a downscale ratio of the screen is increased by repeatedly moving the touch point to the main touch area (M) of the touch screen (S).

In accordance with another aspect of the present invention, there is provided a method of operating a screen on a touch screen (S) of a portable terminal (H), wherein , in order to enlarge or downscale the screen, starting from a specific point on a touch screen, a reference point (P) is primarily tapped or touched by a finger (F) on the touch screen (S), and a touch point is moved from the reference point (P) to another movement point (V) on a main touch area (M) which is a central work area through a touch such that a screen is enlarged when the touch point is moved in a direction opposite to the reference point (P) while the touch point is moved to a movement point (V) for the reference point (P) and the screen is downscaled when the touch point is moved toward the reference point (P).

In accordance with another aspect of the present invention, there is provided a method of operating a screen on a touch screen (S) of a portable terminal (H), wherein in order to designate an area on the touch screen (S) to enlarge or downscale the area, after an area reference point (B) is touched or tapped in a main touch area (M) of the touch screen (S), a screen is enlarged by touching another area determining point (E) which is to be enlarged or downscaled a plurality of times, and the screen is enlarged by touching the area reference point (B) a plurality of times and touching the area determining point (E) once.

### Advantageous Effects

The present invention has been made in an effort to solve the above-mentioned problems, and it is an object of the present invention to easily realize enlargement and downscale of a screen by operating a screen only with a single finger while a user grips a terminal having a touch screen with one hand.

Further, according to the present invention, a specific area on a screen can be set such that the area may be enlarged or downscaled.

Accordingly, the present invention provides a method of operating a screen on a touch screen according to various embodiments, so that a screen can be enlarged or downscaled, or enlarged or downscaled to an arbitrary size, making it possible to significantly improve performance of the touch screen.

### Brief Description of the Drawings

FIGS. 1A, 1B, 1C, and 1D are sequential diagrams for explaining an operating method for realizing enlargement of a screen in a first embodiment of a method of operating a screen on a touch screen according to the present invention.
FIGS. 2A, 2B, 2C, and 2D are sequential diagrams for explaining an operating method for realizing downscale of a screen in a first embodiment of a method of operating a screen on a touch screen according to the present invention.
FIG. 3 is a block diagram showing an example of a hardware configuration according to a first embodiment of the present invention to explain realization of the method of operating a screen on a touch screen according to the present invention.
FIG. 4 is a flowchart showing operation logic according to a first embodiment of the present invention to explain realization of the method of operating a screen on a touch screen according to the present invention.
FIGS. 5A, 5B, and 5C are sequential diagrams and enlarged state views for explaining an operating method for realizing enlargement of a screen in a second embodiment of a method of operating a screen on a touch screen according to the present invention.
FIGS. 6A, 6B, and 6C are sequential diagrams and down-scaled state views for explaining an operating method for realizing downscale of a screen in a second embodiment of a method of operating a screen on a touch screen according to the present invention.
FIGS. 7A, 7B, and 7C are diagrams showing an operating method of realizing enlargement of a screen in a third method of a method of operating a screen on a touch screen according to the present invention and a first enlargement, a finally enlarged screen and a second enlargement, and a diagram showing a finally enlarged screen.
FIGS. 8A and 8B are diagrams for explaining a selection and an operation of a screen enlargement/downscale mode in a fourth embodiment of a method of operating a screen in a touch screen according to the present invention.
FIGS. 9A and 9B are diagrams for explaining a selection and an operation of a screen enlargement/downscale mode in a fourth embodiment of a method of operating a screen in a touch screen according to the present invention.
FIG. 10 is a diagram showing an example of a method of operating a screen on a touch screen according to the related art.

### Mode for Carrying Out the Invention

Hereinafter, a preferred configuration and an operation of the present invention for achieving the object will be described with reference to the accompanying drawings.

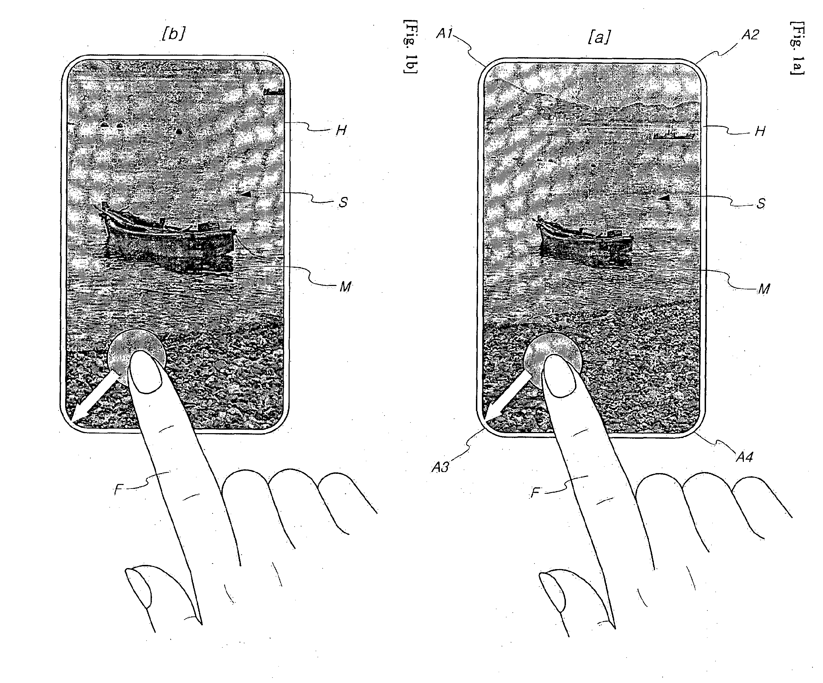

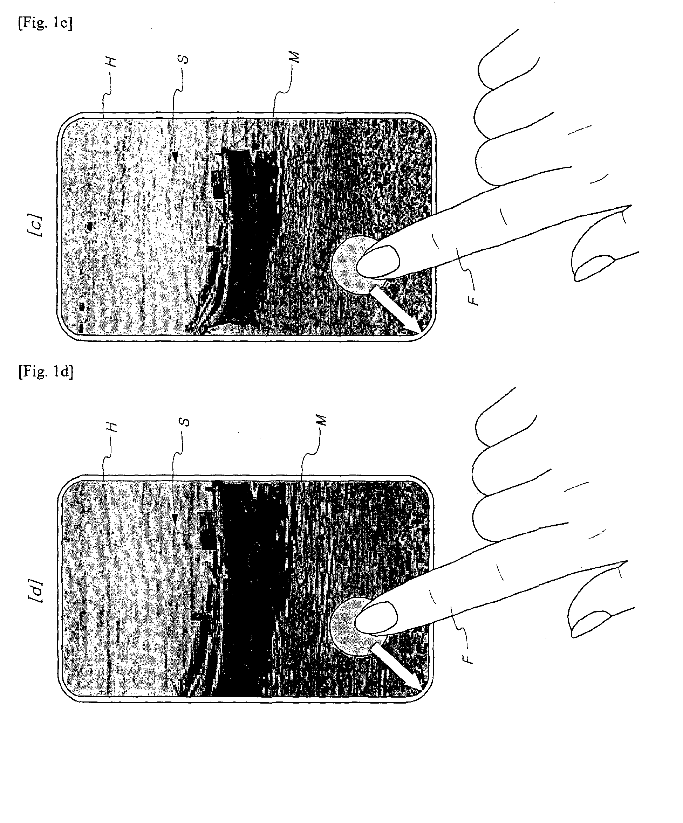

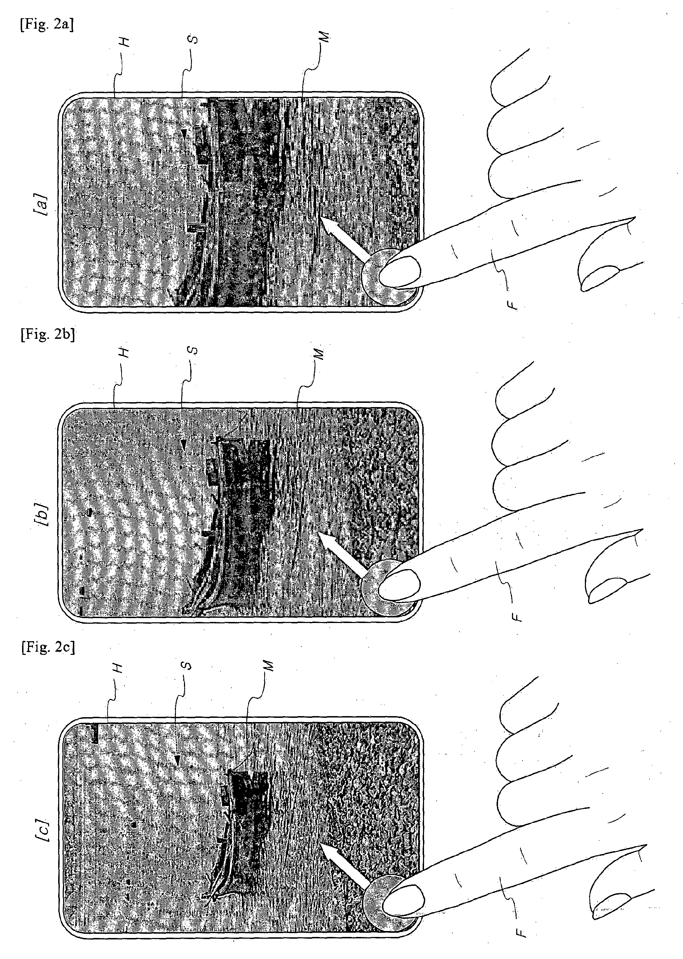

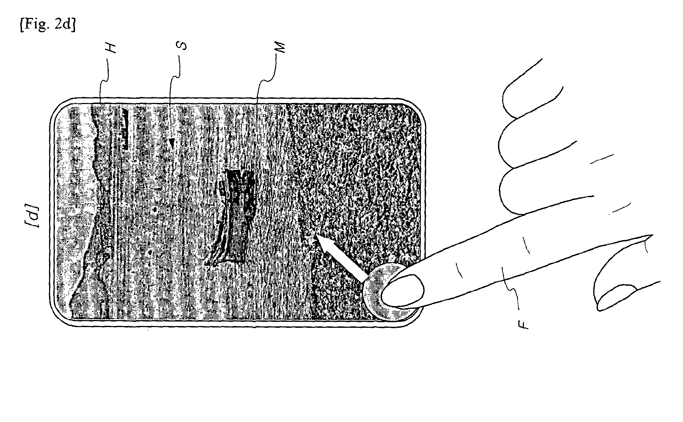

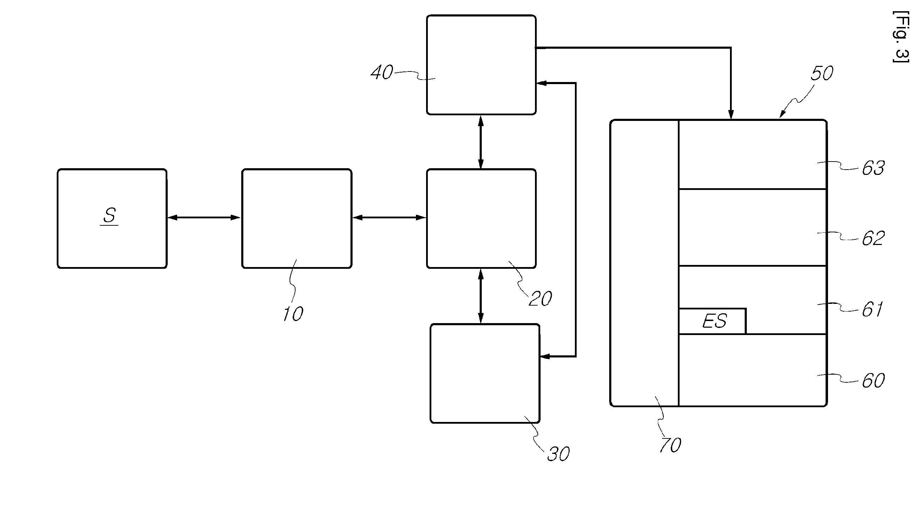

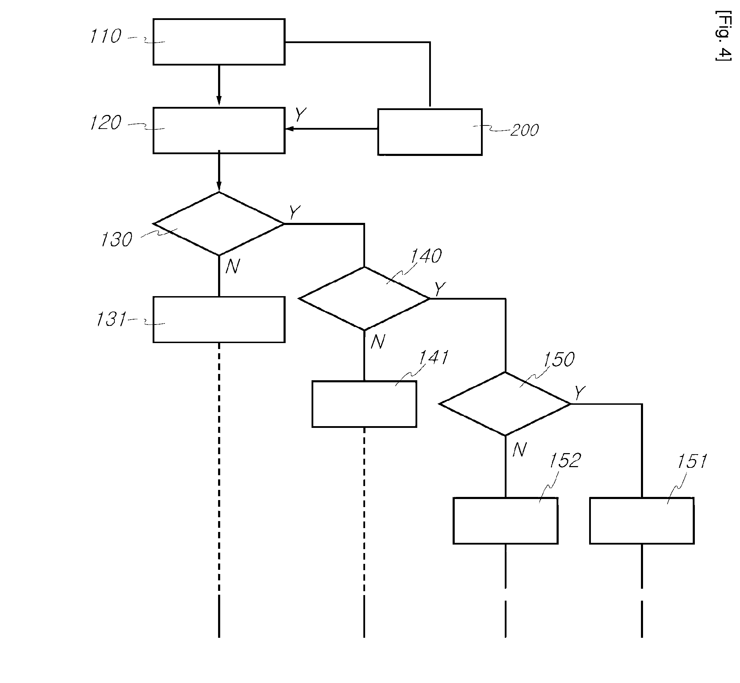

FIGS. 1A, 1B, 1C, and 1D are sequential diagrams for explaining an operating method for realizing enlargement of a screen in a first embodiment of a method of operating a screen on a touch screen according to the present invention. FIGS. 2A, 2B, 2C, and 2D are sequential diagrams for explaining an operating method for realizing downscale of a screen in a first embodiment of a method of operating a screen on a touch screen according to the present invention. FIG. 3 is a block diagram showing an example of a hardware configuration according to a first embodiment of the present invention to explain realization of the method of operating a screen on a touch screen according to the present invention. FIG. 4 is a flowchart showing operation logic according to a first embodiment of the present invention to explain realization of the method of operating a screen on a touch screen according to the present invention.

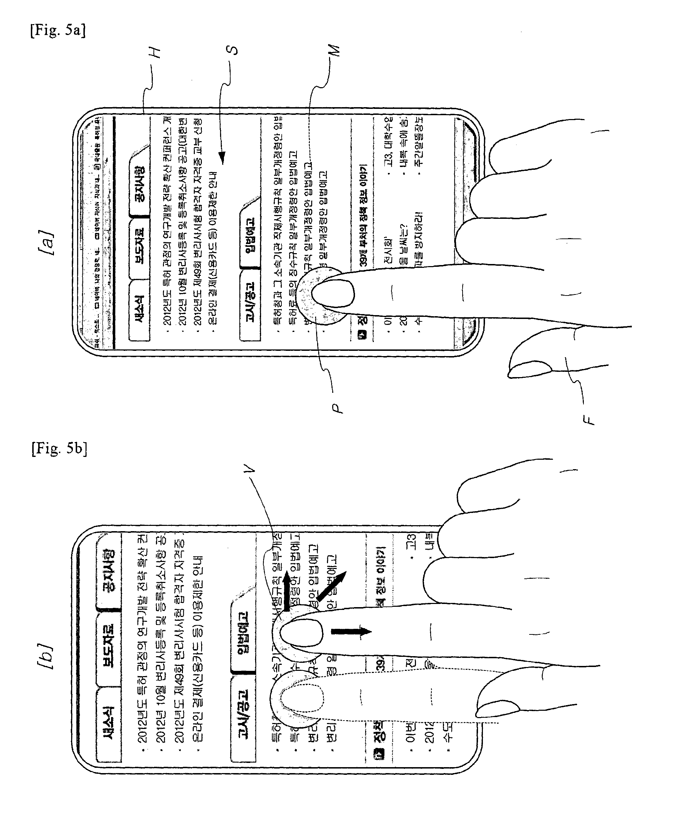

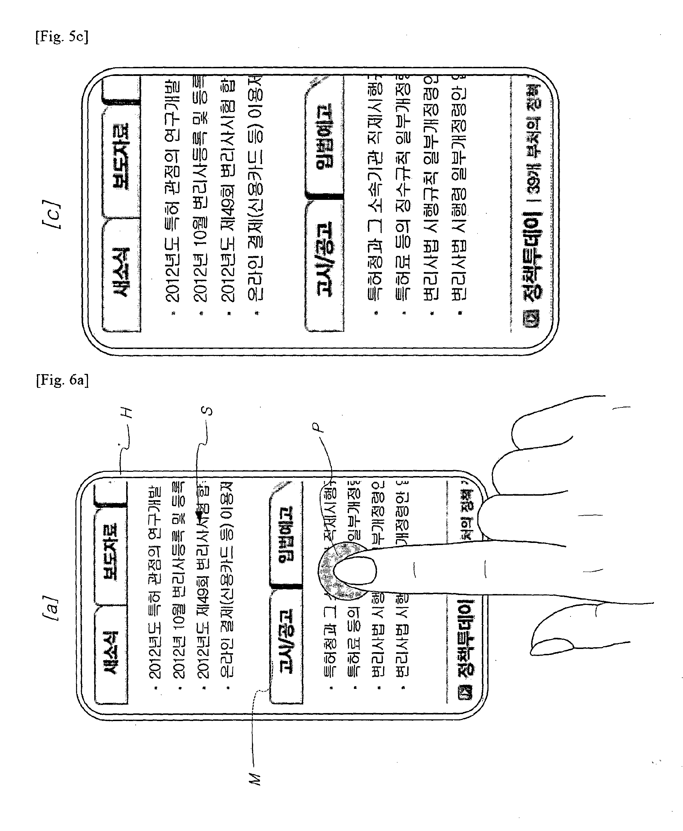

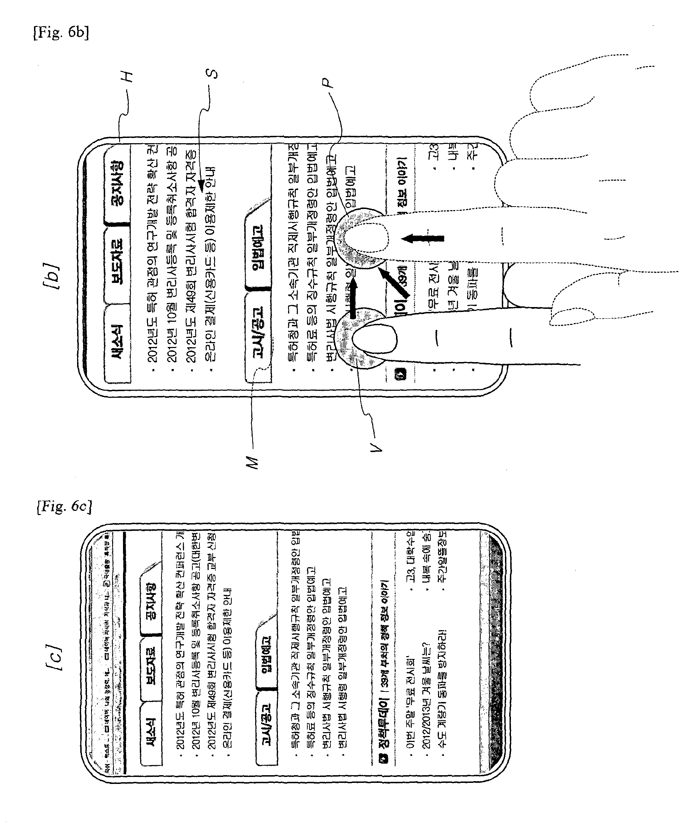

FIGS. 5A, 5B, and 5C are sequential diagrams and enlarged state views for explaining an operating method of realizing enlargement of a screen in a second embodiment of the present invention. FIGS. 6A, 6B, and 6C are sequential diagrams and downscaled state views for explaining an operating method of realizing downscale of a screen in a second embodiment of the present invention.

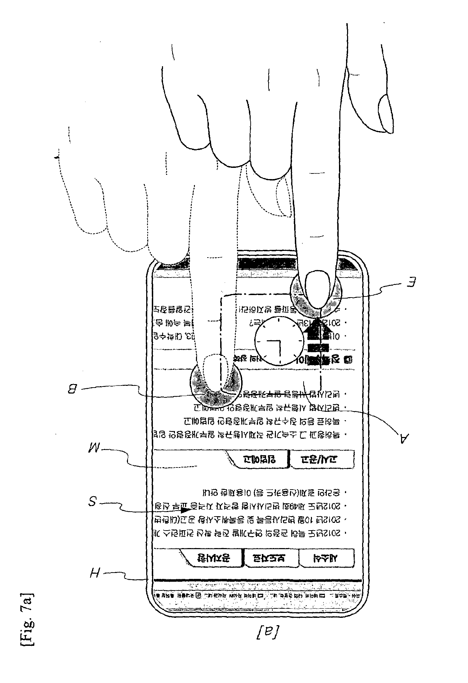

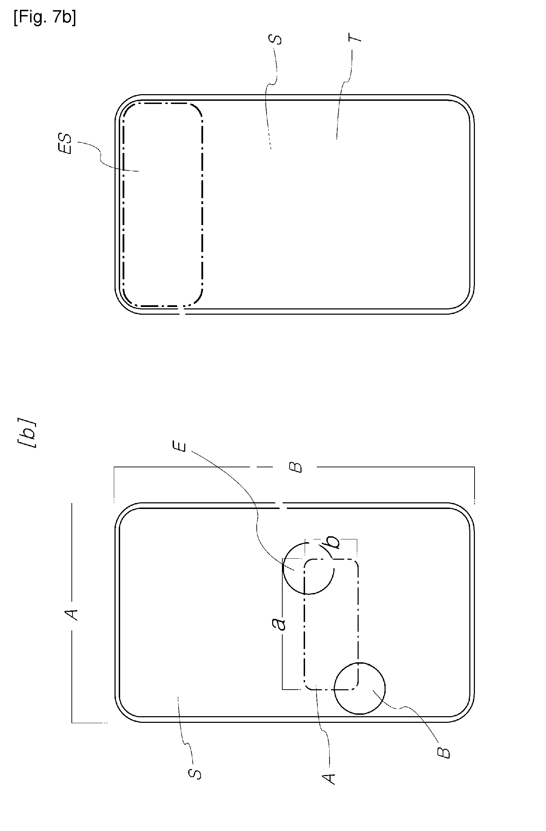

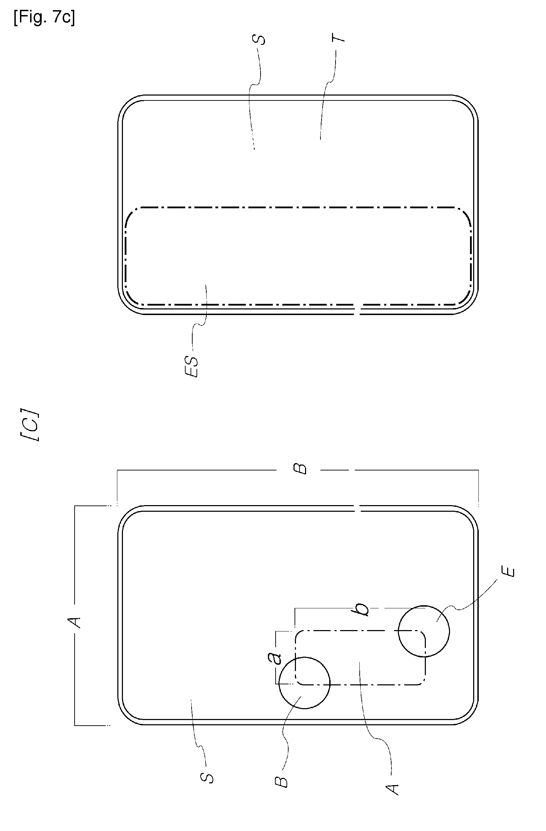

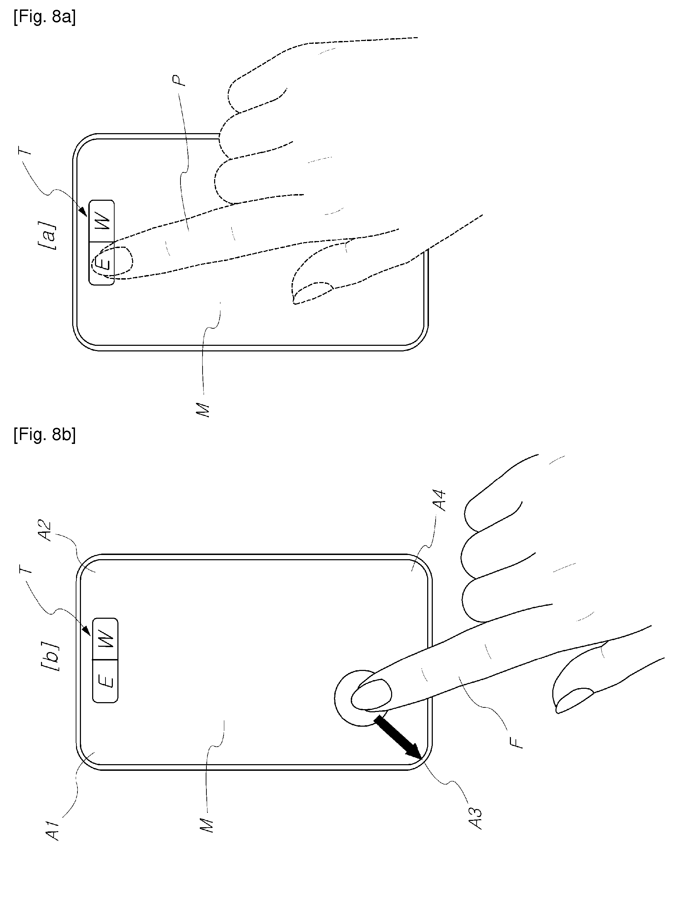

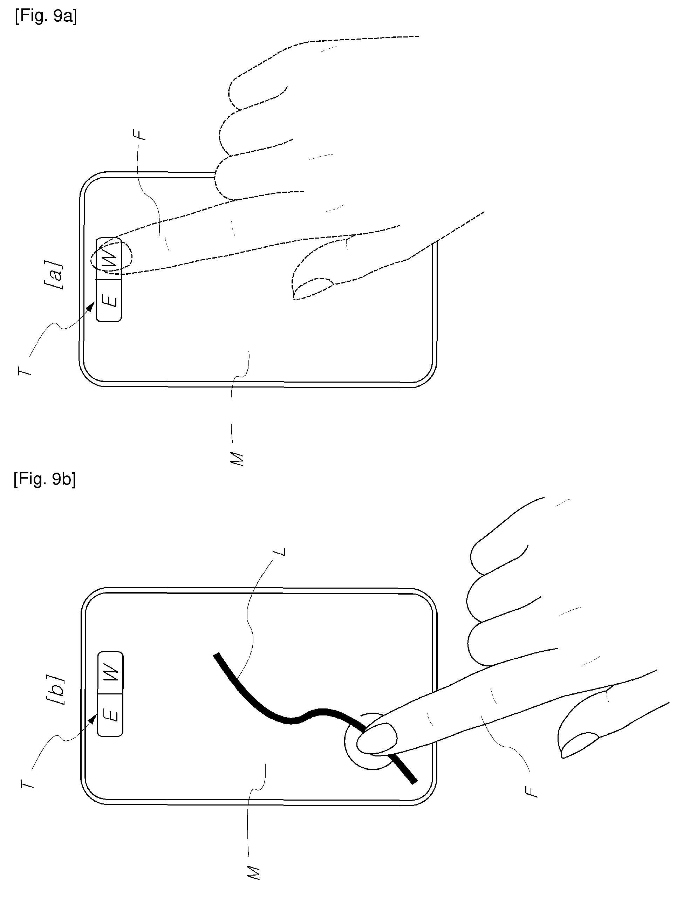

FIGS. 7A, 7B, and 7C are diagrams showing an operating method of realizing enlargement of a screen in a third method of a method of operating a screen on a touch screen according to the present invention and a first enlargement, a finally enlarged screen and a second enlargement, and a diagram showing a finally enlarged screen. FIGS. 8A and 8B are diagrams for explaining a selection and an operation of a screen enlargement/downscale mode in a fourth embodiment. FIGS. 9A and 9B are diagrams for explaining a selection and an operation of an operation mode in a fourth embodiment.

### [First Embodiment]

A first embodiment of a method of operating a screen on a touch screen according to the present invention is shown in FIGS. 1 and 2 as a first embodiment of an operating method.

As shown in FIG. 1, in the first embodiment of the present invention, if a touch point is moved on a touch screen S of a portable terminal H from one point of a main touch area M which is a central work area of the touch screen S toward corner areas A1, A2, A3, and A4 of the touch screen S by a finger F of a user or a touch pen (not shown) while touch sensing is maintained, a mode of the touch screen S proceeds to an enlargement mode to enlarge a screen.

If the screen is to be enlarged more, the touch point is moved to the main touch area M again to repeatedly move the touch point to the corner areas A1, A2, A3, and A4 and the repeated enlargement mode is shown in FIGS. 1B, 1C, and 1D.

In this case, the enlargement degree is set in a program by a movement distance of the finger F and the number of repeated touch movements on the touch screen S, and an enlargement ratio according to a movement speed and a distance of the finger F is set in a software way and thus the user easily recognizes the degree to adapt the setting.

As shown in FIG. 2, contrary to the enlargement, the downscale is achieved if a touch point is moved from any one point of the corner areas A1, A2, A3, and A4 on the touch screen S toward the main touch area M, and the downscale is repeated by the repeated movements of the touch point to the main touch area M of the touch screen S and the repeated downscale process is shown in FIGS. 2B, 2C, and 2D.

In enlarging and downscaling the screen, because a general user may intuitively recognize that a touch point should be moved from the main touch area M to the corner areas A1, A2, A3, and A4 for enlargement of the screen and should be moved from the corner areas A1, A2, A3, and A4 to the main touch area M for downscale of the screen, an intuitive user interface for enlargement and downscale can be realized.

For the enlargement/downscale mode, in a hardware configuration for driving a touch screen S of a general portable terminal, the touch screen S is connected to a touch screen controller 10 which is an I/O system, the touch screen controller 10 is controlled as one of external signals by a CPU 30 in a peripheral device interface 20 which collectively controls various peripheral devices (for example, a microphone, a speaker, a vibration sensor, a GPS sensor, and the like), and the CPU 30 cooperates with software stored in a main memory 50 under the control of a memory controller 40 to perform the above-defined operation.

Various module programs such as a user interface state module 61, a graphic module 62, and an operation recognition module 63 to cooperate with a specific application program 60 based on the application program 60 are installed in the main memory 50, and the module programs are controlled by an OS 70.

The enlargement and downscale of the screen according to an operation type of the enlargement/downscale operation method may be performed by an enlargement/downscale module ES which is one of program modules for a plurality of programs defined in the user interface state module 61. The user interface state module 61 may define various screen operation interfaces, for example, turning of pages and an operation of a power source.

As in the flowchart of FIG. 4, a touch 200 of the touch screen S is generated by a finger F of a user in a state screen 110 of a specifically defined program, the screen proceeds (120) to a queue state for an operation of the screen, and in a touch state, it is determined (130) whether a touch point is moved such that the mode proceeds (140) to a determination mode for a movement direction again in the state of a moved state (Y) and. if there is not movement, is controlled (131) according to another screen operation module defined in the user interface state module 61.

Thus, if it is determined (Y) that there is a movement, the movement direction is determined (140) again such that if the movement is a movement (Y) from the main touch area M to the corner areas A1, A2, A3, and A4, or from the corner areas A1, A2, A3, and A4 to the main touch area M, the mode proceeds to a determination (150) of an enlargement/downscale mode, and if the movement direction is another direction (for example, a lateral upward/downward direction) (N), the mode proceeds another screen operation module 141 (for example, turning of pages or movement of a screen) defined in the user interface state module 61.

After the determination in the determination (150) mode of the enlargement/downscale mode, a program should be set in an enlargement/downscale module ES defined in the user interface state module 61 such that the mode is operated (151) as a screen downscale mode if it is read (Y) that a touch point is moved from the corner areas A1, A2, A3, and A4 to the main touch area M, and the mode is operated (152) as a screen enlargement mode if a touch point is moved from the main touch area M to the corner areas A1, A2, A3, and A4.

The first embodiment of the present invention is a modification such as a modification example, which will be described below, and may cooperate with an application program to be realized.

The hardware configuration and flow control for enlargement/downscale of the screen may be realized by the same configuration and logic as those of an embodiment of the present invention, which will be described below, and thus will not be described further.

### [Second Embodiment]

A second embodiment of a method of operating a screen on a touch screen according to the present invention is shown in FIGS. 5 and 6 as a second embodiment of an operating method.

The enlargement/downscale of the screen should be realized, starting from a specific point on a screen as well as an entire area. That is, a reference point P for enlarging and downscaling a screen should be designated on the touch screen S.

To this end, in the second embodiment of the present invention, a program of the user interface state module 61 for downscale of the screen is defined such that a reference point P which is a basic location for enlargement or downscale of a screen is primarily tapped or touched by a finger F as shown in FIG. 5A, the touch point is moved to another movement point V on the main touch area M to be touched as shown in FIG. 5B, the screen is enlarged when the touch point is moved in an opposite direction of the reference point P while a movement point V for the reference point P is moved, and the screen is downscaled when the touch point is moved from a movement state of the movement point V for the reference point P as shown in FIG. 6A to the reference point P as shown in FIG. 6B.

In the embodiment, a user may freely enlarge or downscale the screen only by a finger F while gripping the portable terminal H with one hand.

FIGS. 5C and 6C show an example of a screen enlarged or downscaled by such an operation.

In the embodiment, it is preferable that when a screen is enlarged or downscaled by touching a movement point V after the reference point P is touched, a predetermined operation time is set such that enlargement or downscale of the screen is effective only when the reference point P and the movement point V are touched in a predetermined set time and may be invalidated after the set time.

### [Third Embodiment]

A third embodiment of a method of operating a screen on a touch screen according to the present invention is shown in FIGS. 7 as a third embodiment of an operating method.

An area is designated on a specific program or a work screen to enlarge or downscale the area. The third embodiment of the present invention allows the designated area to be enlarged or downscaled.

As shown in FIG. 7A, a program of the user interface state module 61 is defined such that after an area reference point B is touched or tapped in the main touch area M of the touch screen S, another area determining point E, which is to be enlarged or downscaled, is touched or tapped lightly twice to set an enlargement area A such that the screen is enlarged.

The enlargement area A set by the area reference point B and the area determining point E by a touch of a user may be two modes.

That is, as shown in FIG. 7B, the program of the user interface state module 61 is defined such that after the area reference point B is touched or tapped in the main touch area M of the touch screen S, another area determining point E, which is to be enlarged or downscaled, is touched or tapped lightly twice to operate a screen enlargement mode, so that when the area reference point B and the area determining point E coincide with a screen ratio of the main touch area M of the touch screen S, the screen enlargement mode is operated with reference to the area including the entire selected range.

In more detail, when it is assumed that a length of a transverse screen span of the touch screen S is A and a length of a longitudinal screen span is B, A/B is an integer value n variably determined according to the portable terminal.

If it is assumed that a length of a transverse area span is a and a length of a longitudinal area span is b in an enlargement area A in which an area reference point B and an area determining point E is set by a touch of the user, the case in which span ratios of the enlargement area A and the touch screen S are the same, that is, A/B = a/b = n is probably impossible, but the enlargement area A may be enlarged by n times on the touch screen S.

As shown in FIG. 7B, because a reference value by which the touch screen S is enlarged such that the screen is filled is a length a of the transverse area span of the enlargement area A when a/b > B, an enlarged area ES is obtained by enlarging a length a of the transverse span of the enlargement area A, and a trail enlargement area T in which a remaining screen is enlarged according to the ratio is added to be an entire enlargement area.

Here, the trail enlargement area T refers to an enlargement area (an area enlarged according to the enlargement ratio) in which the screen of the remaining area is enlarged at the same ratio as the entire touch screen S is to be filled in addition to the enlarged area ES by the enlargement area A enlarged as a reference.

As shown in FIG. 7C, because a reference value by which the touch screen S is enlarged such that the screen is filled is a length b of the longitudinal area span of the enlargement area A when a/b < n, an enlarged area ES is obtained by enlarging a length b of the b span of the enlargement area A, and a trail enlargement area T in which a remaining screen is enlarged according to the ratio is added to be an entire enlargement area.

In the embodiment of the present invention, it is preferable that when the area determining point E is touched twice to enlarge the screen after the area reference point B is touched, the screen is effectively enlarged only when a predetermined operation time is set and the area reference point B and the area determining point E are touched in the set time and the enlargement of the screen is invalidated after the set time.

Although it has been mentioned in the embodiment of the present invention that the area determining point E is touched twice to enlarge the screen after the area reference point B is touched, the embodiment may be modified, for example, by the area determining point E is touched three times or more after the area reference point B is touched or touching the area determining point E once after the area reference point B is touched twice to enlarge the screen.

### [Modifications of First to Third Embodiments]

The first to third embodiments of the method of operating a screen on a touch screen according to the present invention may be realized in the modified operation methods of FIGS. 8 and 9.

Although it has been described that the embodiments of the present invention are collectively performed on all driven application programs, setting according to one or a combination of two or more embodiments is recognized as an operation for enlargement/downscale of a screen irrespective of whether the embodiments are for perform enlargement and downscale of a screen displayed on an application program driven in an application in a smart phone, or whether the application program does not require enlargement/downscale of a screen but is an application program requiring movement of a brush icon, a point, and a line drawing operation according to points in a painting operation as in a graphic-related application program such as PaintUp.

Thus, a specific application program cannot be used if only the operation mode is set because a case of enlarging or downscaling a screen by tapping, touching, or moving a touch point on the main touch area M cannot be distinguished from a case such as a brushing operation, a line drawing operation, a pencil line drawing operation, or a line drawing operation of marking dots and connecting the dots with a line for an graphic operation.

In consideration of the problem, as shown in FIG. 8, in the fourth embodiment of the present invention, when an application program is driven on the touch screen S, a mode toggle button T for selecting a screen operation mode is simultaneously displayed at a predetermined location such as an upper end of the main touch area M. The mode toggle button T may be installed in the application programs or may be collectively defined by the user interface state module 61 to be driven all application programs.

As shown, the mode toggle button T corresponds to a touch graphic button having two divided areas, and one area corresponds to a screen enlargement/downscale mode touch button E and the other area is an operation setting button W for switching-off of the screen enlargement/downscale mode for an operation of a specific application program.

Through the setting, a screen enlargement/downscale mode touch button E of the mode toggle button T is touched and set in a screen displayed after a specific program is booted as in FIG. 8A, the screen may be enlarged or downscaled as defined in the user interface state module 61 in one of the embodiments of the present invention as in FIG. 8B.

However, if the operated application program is an application program for performing a graphic operation, a user switches off the screen enlarging/downscaling function by touching an operation setting button W for switching-off of a screen enlargement/downscale mode of the mode toggle button T as shown in FIG. 9A so that an operation can be performed with various tools (a brush, a pencil, a dot drawing operation, and a line drawing operation) set by the specific application program.

When a work area WA needs to be enlarged during work, the user touches a screen enlargement/downscale mode touch button E of the mode toggle button T again to perform an additional operation, for example, a fine correction operation.

Of course, the embodiments may be performed in various screens in addition to a program such as Sketch-Up according to a type of an application program.

Display of the mode toggle button T, the screen enlargement/downscale mode touch button E of the mode toggle button T, and a work setting button W and driving of an application program according to selection of the mode toggle button T should be defined by the user interface state module 61 individually or as a combination with another module.

As in the modified embodiment, although a mode toggle button T having a screen enlargement/downscale mode touch button E and a work setting button W of a separated area for selection of a screen operation mode may be configured at a predetermined location on the touch screen S, one mode toggle button is set as a button for an integrated area and switching-on/off of the mode toggle button for enlarging or downscaling a screen is realized such that the screen is enlarged or downscaled during switching-on of the mode toggle button and a work setting mode is operated in toggle during switching-off of the mode toggle button.

### Industrial applicability

the present invention provides a method of operating a screen on a touch screen according to various embodiments, so that a screen can be enlarged or downscaled, or enlarged or downscaled to an arbitrary size, making it possible to significantly improve performance of the touch screen.

## Claims

1. A method of operating a screen on a touch screen (S) of a portable terminal (H), wherein: a touch point is moved on a touch screen (S) of a portable terminal (H) from one point of a main touch area (M) which is a central work area of the touch screen (S) toward corner areas (A1, A2, A3, A4) of the touch screen (S) by a finger (F) of a user or a touch pen while touch sensing is maintained such that a screen is enlarged; an enlargement ratio of the screen is increased by moving to the main touch area (M) and repeatedly moving the touch point to the corner areas (A1, A2, A3, A4); a touch point is moved from one point of the corner areas (A1, A2, A3, A4) of the touch screen (S) toward the main touch area (M) such that the screen is downscaled; and a downscale ratio of the screen is increased by repeatedly moving the touch point to the main touch area (M) of the touch screen (S).

2. A method of operating a screen on a touch screen (S) of a portable terminal (H), wherein, in order to enlarge or downscale the screen starting from a specific point of the touch screen: a reference point (P) is firstly set by tapping or touching with a finger (F) on the touch screen (S); another movement point (V) on a main touch area (M), which is a central work area, is touched after moving away from the reference point (P); and a screen is enlarged when movement of the movement point (V) in relation to the reference point (P) is moving away from the reference point (P) and the screen is downscaled when moving toward the reference point (P).

3. The method of claim 2, wherein when setting the reference point (P) and enlarging or downscaling the screen by touching the movement point (V), enlargement or downscaling of the screen is valid only when the movement point (V) is touched in relation the reference point (P) within a set operation time, and is invalidated after the set time.

4. A method of operating a screen on a touch screen (S) of a portable terminal (H), wherein, in order to designate an area on the touch screen (S) to enlarge or downscale the area: after an area reference point (B) is touched or tapped in a main touch area (M) of the touch screen (S), a screen is enlarged by touching, a plurality of times, another area determining point (E) for determining an area to be enlarged or downscaled; or the screen is enlarged by touching the area reference point (B) a plurality of times and touching the area determining point (E) once.

5. The method of any one of claims 1, 2, or 4, wherein, when an application program is run on the touch screen (S): the application program comprises a program for displaying, at the same time, a mode toggle button (T) for selecting a screen operation mode at a predetermined location of the main touch area (M) or a user interface module (61) collectively provides a definition so that all application programs can run the program; and an ON state of the screen enlargement/downscale mode and an OFF state of the screen enlargement/downscale mode for an operation set on the application program are converted by the mode toggle button (T).
